# EUROPÄISCHE PATENTSCHRIFT

(11) **EP 2 718 154 B1**
(45) Veröffentlichungstag und Bekanntmachung des Hinweises auf die Patenterteilung: **22.04.2015**
(21) Anmeldenummer: 12732556.1
(22) Anmeldetag: 05.06.2012
(51) Int. Cl.: B60R 21/231, B60R 21/235

(54) **GASSACK FÜR EIN FAHRZEUGINSASSEN-RÜCKHALTESYSTEM UND VERFAHREN ZUM HERSTELLEN EINES GASSACKS**
AIRBAG FOR A VEHICLE OCCUPANT RESTRAINT SYSTEM AND METHOD FOR PRODUCING AN AIRBAG
SAC GONFLABLE POUR UN SYSTÈME DE RETENUE DES PASSAGERS D'UN VÉHICULE ET PROCÉDÉ DE PRODUCTION D'UNE SAC GONFLABLE

(30) Priorität: 08.06.2011 DE 102011050932
(43) Veröffentlichungstag der Anmeldung: 16.04.2014
(73) Patentinhaber: Takata AG, 63743 Aschaffenburg (DE)
(72) Erfinder: GLAAB, Ralf, 63829 Krombach (DE); BÜTTNER, Daniel, 63768 Hösbach (DE)
(74) Vertreter: Staroske, Sandro
(86) Internationale Anmeldenummer: PCT/EP2012/060593
(87) Internationale Veröffentlichungsnummer: WO 2012/168237

(56) Entgegenhaltungen:
- EP-A1- 1 688 320
- WO-A1-2005/023601
- WO-A1-2009/082305

## Beschreibung

Die Erfindung betrifft einen Gassack für ein Fahrzeuginsassen-Rückhaltesystem gemäß Anspruch 1 sowie ein Verfahren zum Herstellen eines derartigen Gassacks gemäß Anspruch 15.

Aus dem Stand der Technik sind sogenannte 3D-Gassäcke bekannt, die zum Beispiel eine erste Gassacklage, die aus zwei miteinander verbundenen Gassacklagensegmenten ausgebildet ist, und eine zweite, mit der ersten Gassacklage verbundene Gassacklage aufweisen. Die Gassacklagensegmente der ersten Gassacklage sind über eine erste Naht miteinander verbunden, die sich in einer ersten Ebene erstreckt, während die Verbindung der ersten mit der zweiten Gassacklage über eine zweite Naht ausgeführt ist, die in einer zweiten Ebene verläuft, die schräg oder quer zur ersten Ebene orientiert ist. Darüber hinaus ist z.B. aus der WO 2009/082305 ein Gassack nach dem Oberbegriff des Anspruchs 1 bekannt.

Das der Erfindung zugrunde liegende Problem besteht darin, einen Gassack bereitzustellen, der sich in Bezug auf seine Schutzwirkung möglichst optimal im Fahrzeuginnenraum positioniert und der dennoch auf möglichst einfache Weise herstellbar ist.

Dieses Problem wird durch den Gassack mit den Merkmalen gemäß Anspruch 1 sowie durch das Verfahren mit den Merkmalen gemäß Anspruch 15 gelöst. Weiterbildungen der Erfindungen sind in den abhängigen Ansprüchen angegeben.

Danach wird ein Gassack für ein Fahrzeuginsassen-Rückhaltesystem bereitgestellt, mit
- einer ersten und einer zweiten Gassacklage, die eine aufblasbare Kammer des Gassacks begrenzen, wobei
- die erste Gassacklage einen ersten Abschnitt mit einer Öffnung zum zumindest teilweisen Einführen eines Gasgenerators aufweist sowie einen zweiten Abschnitt, der auf den ersten Abschnitt zu umgefaltet und mit dem ersten Abschnitt verbunden ist, so dass der erste und der zweite Abschnitt der ersten Gassacklage einen Aufnahmebereich zum Aufnehmen eines Gasgenerators ausbilden.

Der von der ersten Gassacklage ausgeformte Aufnahmebereich realisiert demnach einen Anbindungshals des Gassacks, über den ein Gasgenerator an den Gassack angekoppelt und das vom Gasgenerator erzeugte Gas in den Gassack eingeblasen werden kann.

Insbesondere ist der mit dem ersten Abschnitt der ersten Gassacklage verbundene zweite Abschnitt zumindest näherungsweise um 180º umgefaltet, so dass er z.B. zumindest abschnittsweise an dem ersten Abschnitt anliegt. Der aus dem ersten und zweiten Abschnitt der ersten Gassacklage gebildete Aufnahmebereich steht insbesondere von einem durch den übrigen Bereich der ersten Gassacklage gebildeten Grundbereich (und entsprechend auch von der zweiten Gassacklage) ab.

Die Öffnung zum Einführen des Gasgenerators weist insbesondere einen kreisförmigen Querschnitt auf, wobei die Erfindung natürlich nicht auf eine bestimmte Geometrie der Öffnung ("Einblasmund") beschränkt ist, sondern vielmehr dem zu verwendenden Gasgenerator (z.B. in Form eines Topf- oder Rohrgasgenerators) angepasst sein kann.

Des Weiteren ist der umgefaltete zweite Abschnitt der ersten Gassacklage so beschaffen, dass er sich über die Öffnung des ersten Abschnitts hinwegerstreckt.

Der Aufnahmebereich kann neben der Öffnung zum Aufnehmen eines Gasgenerators Befestigungsstrukturen (zum Beispiel Befestigungsöffnungen) aufweisen, die zum Hindurchführen von Befestigungsmitteln (zum Beispiel Bolzen und/oder Schrauben) dienen.

Die Öffnung für den Gasgenerator erstreckt sich insbesondere in einer Ebene, die - bezogen auf den aufgeblasenen Zustand des Gassacks - senkrecht oder quer zur Haupterstreckungsebene der zweiten Gassacklage verläuft. Unter der "Haupterstreckungsebene" wird eine Ebene verstanden, entlang derer die zweite Gassacklage ihre größte Ausdehnung besitzt. Beispielsweise handelt es sich bei der Haupterstreckungsebene der zweiten Gassacklage (bezogen auf den aufgeblasenen Zustand des Gassacks) um eine Ebene, die zumindest näherungsweise durch die Fahrzeughöhen- und Fahrzeugquerrichtung aufgespannt ist. Dabei ist es denkbar, dass sich die zweite Gassacklage nach dem Aufblasen des Gassacks etwas wölbt, d.h. auch eine gewisse Ausdehnung in Fahrzeuglängsrichtung aufweist.

Gemäß einer anderen Weiterbildung der Erfindung ist der Aufnahmebereich durch zwei voneinander beabstandete Nähte begrenzt, über die der erste und der zweite Abschnitt der ersten Gassacklage miteinander verbunden sind. Beispielsweise verlaufen die Nähte in einer Ebene (die der Haupterstreckungsebene des Aufnahmebereichs im nicht aufgeblasenen Zustand des Gassacks) entspricht, die im aufgeblasenen Zustand des Gassacks schräg oder senkrecht zu der Haupterstreckungsebene der zweiten Gassacklage verläuft. Insbesondere befindet sich in dieser Ebene auch die Öffnung für den Gasgenerator.

In einer anderen Ausgestaltung der Erfindung ist der Aufnahmebereich für den Gasgenerator in einem bestimmten Abstand von einem Rand des Gassacks (insbesondere des erwähnten Grundbereiches der ersten Gassacklage) positioniert. Der Abstand des Aufnahmebereichs wird z.B. auf einen festen Endabschnitt (Fuß) des Aufnahmebereiches bezogen, mit dem er in den durch den übrigen Gassack ausgebildeten Grundbereich der ersten Gassacklage einmündet (d.h. über den der Aufnahmebereich insbesondere einstückig mit dem Grundbereich verbunden ist).

Die Lage dieses festen Endabschnitts des Aufnahmebereichs ist insbesondere durch die Länge und Position der Nähte bestimmt, über die der erste und der zweite Abschnitt der ersten Gassacklage beim Herstellen des Aufnahmebereichs miteinander verbunden werden. Beispielsweise mündet der feste Endabschnitt des Aufnahmebereichs an einer gedachten Schnittlinie in den Grundbereich der ersten Gassacklage ein, entlang derer die Haupterstreckungsebene des Aufnahmebereichs (d.h. die Ebene, in der sich die Nähte zum Verbinden des ersten und zweiten Abschnitts der ersten Gassacklage erstrecken) die Haupterstreckungsebene des flach ausgebreiteten Grundbereichs der ersten Gassacklage (oder der flach ausgebreiteten zweiten Gassacklage) schneidet.

Der Grundbereich der ersten Gassacklage weist insbesondere einen ersten Randabschnitt auf, der - bezogen auf den im Fahrzeug eingebauten und aufgeblasenen Zustand - dem Fahrzeugboden zugewandt ist, und einen zweiten Randabschnitt, der dem Fahrzeugdach zugewandt ist, wobei der Aufnahmebereich so positioniert ist, dass sein in den Grundbereich einmündender Endabschnitt einen Abstand von dem ersten Randabschnitt aufweist, der mehr als die Hälfte der Ausdehnung (Länge) L des flach ausgebreiteten Grundbereichs der ersten Gassacklage beträgt, wobei die Ausdehnung L zwischen dem ersten und zweiten Randabschnitt des Grundbereichs der ersten Gassacklage und der Abstand L₁ insbesondere bezogen auf die Mitte des Aufnahmebereichs zwischen seinen Nähten (über die der erste und der zweite Abschnitt der ersten Gassacklage miteinander verbunden sind), z.B. entlang einer Symmetrieachse, bestimmt wird.

Der "erste Randabschnitt" ist insbesondere ein Abschnitt des Grundbereichs der ersten Gassacklage, der bezogen auf den im Fahrzeug eingebauten und aufgeblasenen Zustand des Gassacks den geringsten Abstand zum Fahrzeugboden besitzt, während der "zweite Randabschnitt" ein Abschnitt des Grundbereichs ist, der den geringsten Abstand zum Fahrzeugdach aufweist. Insbesondere ist der Aufnahmebereich zum Aufnehmen des Gasgenerators so positioniert, dass er im montierten Zustand des Gassacks oberhalb - bezogen auf die Fahrzeughöhenrichtung - der Gassackmitte zwischen dem ersten und dem zweiten Randabschnitt des Grundbereiches der ersten Gassacklage und/oder zwischen entsprechende Randbereichen des Gassacks verläuft.

In einem anderen Beispiel beträgt der Abstand L₁ des Aufnahmebereichs von dem ersten Randbereich mindestens die Hälfte und höchstens das 0,8-fache, insbesondere das 0,6-fache, der Ausdehnung L.

Gemäß einer anderen Ausgestaltung der Erfindung weist der Aufnahmeabschnitt - bezogen auf den nicht aufgeblasenen Zustand des Gassacks - eine maximale Ausdehnung (Höhe) X auf, wobei der Mittelpunkt der Öffnung zum Einführen eines Gasgenerators in einem Abstand X₁ von dem in den Grundbereich einmündenden Endabschnitt positioniert ist, der zumindest näherungsweise die Hälfte der maximalen Ausdehnung X des Aufnahmebereichs beträgt. Die "maximale Ausdehnung" des Aufnahmeabschnitts wird ab dem in den Grundbereich der ersten Gassacklage einmündenden, festen Endabschnitt des Aufnahmeabschnitts und senkrecht zum Verlauf dieses festen Endabschnitts bestimmt, beispielsweise ist die Ausdehnung die maximale Entfernung zwischen dem festen und einem freien Endabschnitt des Aufnahmeabschnitts.

Beispielsweise beträgt der Abstand X₁ mindestens das 0,4-fache und höchstens das 0,8-fache der maximalen Ausdehnung X des Aufnahmebereichs.

Gemäß einer anderen Ausgestaltung der Erfindung ist die erste Gassacklage aus mindestens zwei Gassacklagensegmenten, die über mindestens eine Naht miteinander verbunden sind, ausgebildet. Denkbar ist, dass die Gassacklagensegmente jeweils mit einem Teilabschnitt einander überlappend miteinander verbunden sind, insbesondere derart, dass eine Verstärkung des (durch Verbinden des ersten und zweiten Abschnitts der ersten Gassacklage herzustellenden) Aufnahmebereichs entsteht.

Es ist natürlich nicht zwingend, dass die erste Gassacklage aus mehreren separaten Gassacklagensegmenten ausgebildet ist. Vielmehr ist auch denkbar, dass die erste Gassacklage einstückig ausgebildet ist. Beispiele für geeignete Gassacklagenzuschnitte werden weiter unten erläutert. Die erste Gassacklage ist insbesondere mit der zweiten Gassacklage entlang einer Umfangsnaht miteinander verbunden.

Der erfindungsgemäße Gassack ist insbesondere als Frontgassack (Fahrer- oder Beifahrergassack) ausgebildet. Die Erfindung betrifft auch ein Fahrzeug mit einem wie oben beschriebenen Gassack.

Des Weiteren betrifft die Erfindung auch ein Verfahren zum Herstellen eines Gassacks, mit den Schritten
- Bereitstellen einer ersten und einer zweiten Gassacklage, wobei die erste Gassacklage einen ersten Abschnitt mit einer Öffnung zum zumindest teilweisen Einführen eines Gasgenerators aufweist;
- Umfalten eines zweiten Abschnitts der ersten Gassacklage auf den ersten Abschnitt zu; und
- Verbinden des zweiten mit dem ersten Abschnitt, so dass der erste und der zweite Abschnitt der ersten Gassacklage einen Aufnahmebereich zum Aufnehmen eines Gasgenerators ausbilden.

Die Erfindung wird anhand von Ausführungsbeispielen unter Bezugnahme auf die Figuren näher erläutert. Es zeigen:
- Figur 1: Zuschnitte für Gassacklagen eines erfindungsgemäßen Gassacks;
- Figuren 2A bis 2G: Schritte der Herstellung eines erfindungsgemäßen Gassacks;
- Figur 3: einen Gassack gemäß einem Ausführungsbeispiel der Erfindung;
- Figur 4: den Gassack aus Figur 3 im im Fahrzeug montierten und aufgeblasenen Zustand;
- Figur 5: eine Abwandlung der ersten Gassacklage;
- Figuren 6A bis 6D: Schritte bei der Herstellung eines erfindungsgemäßen Gassacks unter Verwendung der Gassacklage aus Figur 6;
- Figur 7: eine weitere Abwandlung der ersten Gassacklage; und
- Figuren 8A bis 8D: Schritte bei der Herstellung eines erfindungsgemäßen Gassacks unter Verwendung der ersten Gassacklage aus Figur 7.

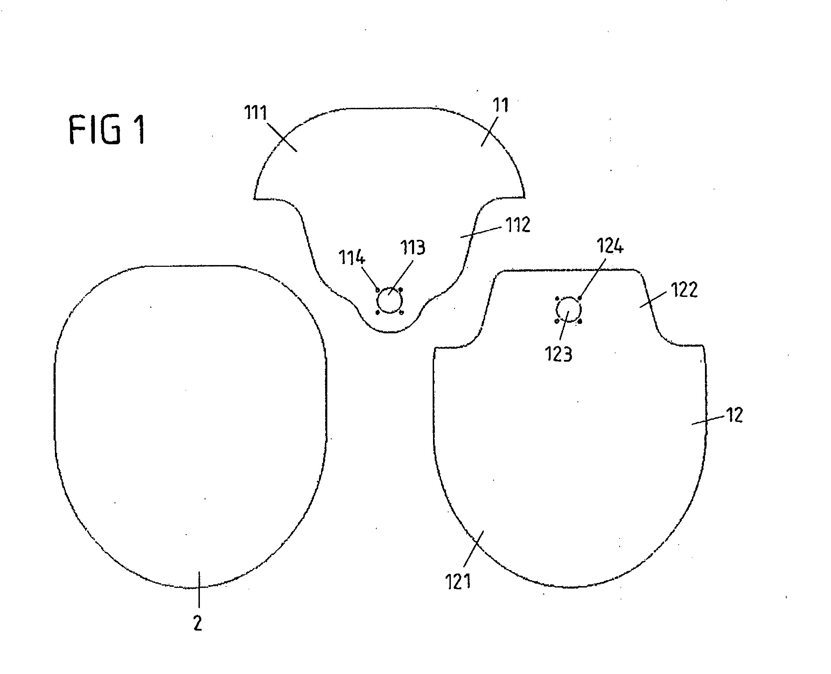

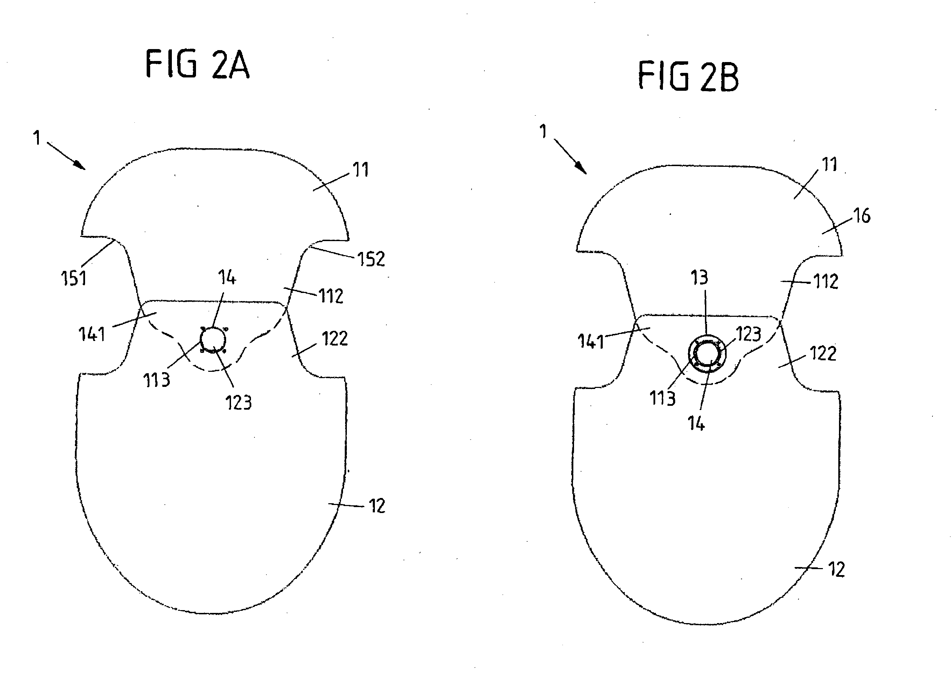

Figur 1 zeigt zum einen zwei Gassackzuschnitte, die ein erstes und ein zweites Gassacklagensegment 11, 12 ausbilden, die zu einer ersten Gassacklage 1 (vgl. Figuren 2A, 2B) miteinander verbunden werden sollen. Zum anderen ist in Figur 1 ein Zuschnitt für eine zweite Gassacklage 2 dargestellt. Die Zuschnitte sind insbesondere aus einem gewebten Material hergestellt.

Die Segmente 11, 12 weisen jeweils einen Grundkörper 111, 121 auf, von dem ein schmalerer Abschnitt 112, 122 absteht. In den schmaleren Abschnitten 112, 122 ist jeweils eine kreisförmige Öffnung 113, 123 vorgesehen, die jeweils von vier kleineren Öffnungen 114, 124 umgeben sind.

Die beiden Segmente 11, 12 werden so angeordnet, dass sich die schmaleren Abschnitte 112, 122 teilweise überlappen und die deckungsgleichen Öffnungen 113, 123 sowie die Öffnungen 114, 124 miteinander fluchten (Figur 2A). Gleichzeitig entstehen Einbuchtungen 151, 152, deren Kontur durch einen Seitenrand des ersten und des zweiten Segments 11, 12 (jeweils der schmaleren Abschnitte 112, 122) bestimmt ist.

Anschließend werden die Segmente 11, 12 über eine Kreisnaht 13, die die Öffnungen 113, 123 konzentrisch umgibt und die außerhalb der kleineren Öffnungen 114, 124 verläuft, miteinander verbunden und auf diese Weise die erste Gassacklage 1 erzeugt. Die Naht 13 ist insbesondere als Nähnaht ausgebildet, wobei jedoch auch denkbar ist, dass eine Kleb- oder Schweißnaht verwendet wird. Durch die miteinander überlappend verbundenen Abschnitte 112, 122 entsteht eine Verstärkung (Mehrlagigkeit) im Bereich der überlappenden Öffnungen 113, 123.

Die miteinander fluchtenden Öffnungen 113, 123 bilden in einem (ersten) Abschnitt 141 der ersten Gassacklage 1 eine durchgehende Öffnung 14 aus, die zur Aufnahme eines Gasgenerators (nicht dargestellt) dient, während die kleineren Öffnungen 114, 124 Befestigungsöffnungen bilden, die zum Festlegen des Gasgenerators an dem Gassack genutzt werden können.

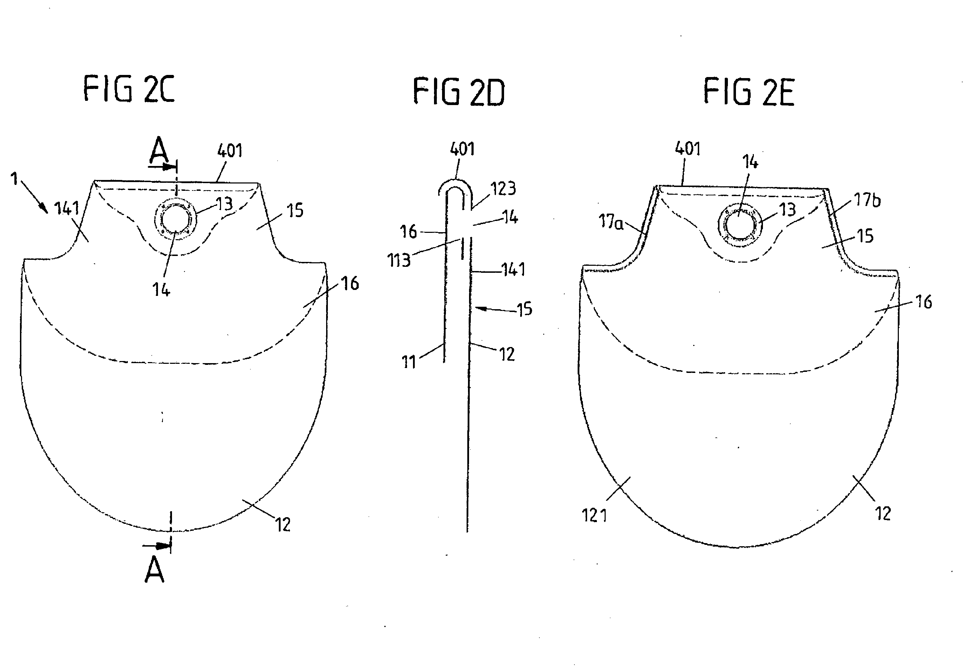

Nach dem Verbinden der Segmente 11, 12 wird ein zweiter Abschnitt 16 der hergestellten ersten Gassacklage 1 (nach hinten) und auf den ersten Abschnitt 141 zu umgefaltet, so dass sich der Abschnitt 16 über die Öffnung 14 hinweg erstreckt (an einer dem vorderen Gassacklagensegment 12 abgewandten Seite des ersten Abschnitts 141) und die Seitenränder der Segmente 11, 12 im Bereich der Einbuchtungen 151, 152 zur Deckung kommen. Einen Schnitt entlang der Symmetrieachse A-A der ersten Gassacklage 1 zeigt die Figur 2D.

Ein Teil des umgefalteten Abschnitts 16 wird über Nähte 17a, 17b mit dem ersten Abschnitt 141 der ersten Gassacklage 1 verbunden (Fig. 2E), um einen Aufnahmeabschnitt 15 zur Aufnahme eines Gasgenerators zu erzeugen. Der Aufnahmeabschnitt 15 besitzt einen horizontal (senkrecht zur Symmetrieachse A-A) verlaufenden freien Endabschnitt 401, von dem zu beiden Seiten des Endabschnitts 401 jeweils ein sich schräg zur Symmetrieachse A-A erstreckender Seitenrand des Aufnahmeabschnitt 15 abgeht, der über eine Krümmung in einen wiederum horizontal verlaufenden Abschnitt übergeht. Die Nähte 17a, 17b folgen jeweils der Kontur des Aufnahmebereichs 15.

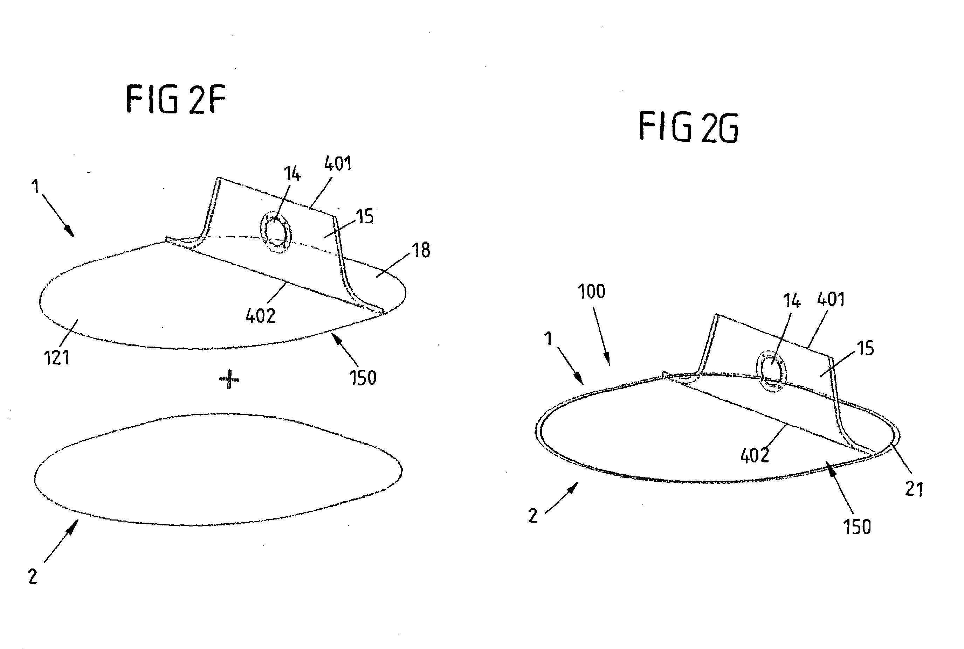

Nach Verbinden des zweiten Abschnitts 16 mit dem ersten Abschnitt 141 über die Nähte 17a, 17b wird ein nicht mit dem Aufnahmebereich 15 verbundener Teilbereich 18 der ersten Gassacklage 1 zurückgefaltet, so dass er sich im Wesentlichen in einer Ebene mit dem breiteren Abschnitt 121 des Segmentes 12 befindet (obere Darstellung der Figur 2F). Infolgedessen steht der Aufnahmebereich 15 von einem durch den übrigen Bereich der ersten Gassacklage (außerhalb des Aufnahmebereichs 15) gebildeten Grundbereich 150 ab (Fig. 2G), wobei der Aufnahmebereich 15 über einen festen Endabschnitt 402 einstückig mit dem Grundbereich 150 verbunden ist.

Nach Herstellung des Aufnahmebereichs 15 wird die erste Gassacklage 1 (d.h. ihr Grundbereich 150) mittels einer Umfangsnaht 21 mit der zweiten Gassacklage 2 verbunden, wodurch der in Figur 2G gezeigte erfindungsgemäße Gassack 100 entsteht.

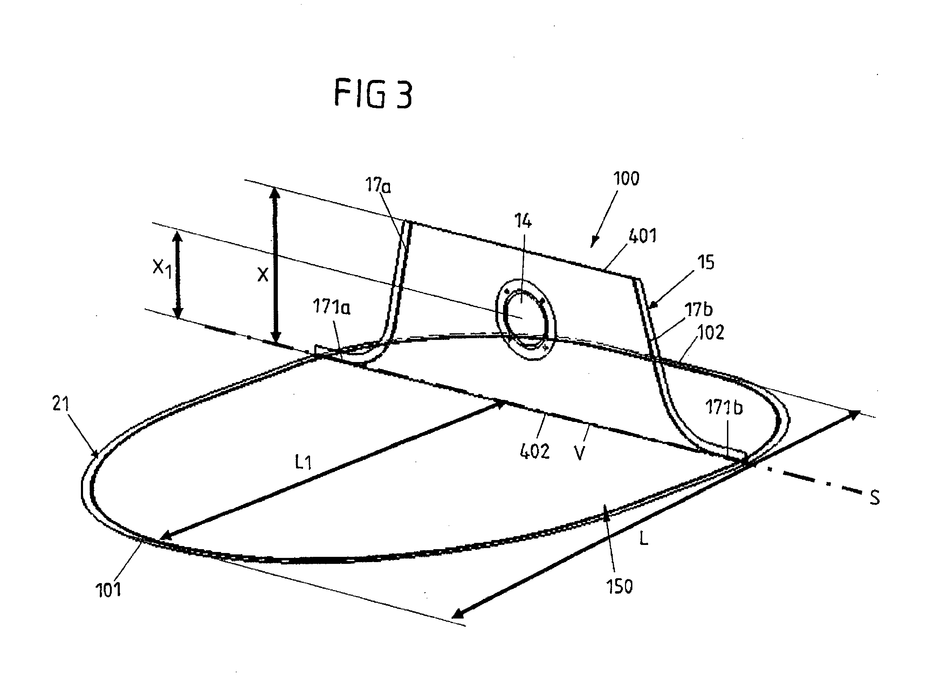

Figur 3 zeigt den nicht aufgeblasenen Gassack 100 aus Figur 2G in vergrößerter Darstellung, wobei sich der Grundbereich 150 der ersten Gassacklage 1 und die zweite Gassacklage 2 sich in einem flach ausgebreiteten Zustand befinden.

Der Grundbereich 150 der ersten Gassacklage (und entsprechend die zweite Gassacklage 2 bzw. der Gassack 100) weist einen ersten Randbereich 101 auf, der im aufgeblasenen und im Fahrzeug montierten Zustand des Gassacks dem Fahrzeugboden zugewandt ist, sowie einen zweiten Randbereich 102, der dem ersten Randbereich 101 entlang einer Symmetrieachse des Gassacks 100 (Achse A-A in Fig. 2C) gegenüberliegt. Der zweite Randbereich 102 ist im aufgeblasenen und montierten Zustand des Gassacks einem Fahrzeughimmel zugewandt.

Der Gassack 100 (der Grundbereich 150 der ersten Gassacklage) besitzt eine Ausdehnung L zwischen den Randabschnitten 101, 102 (entlang der Symmetrieachse betrachtet). Die Ausdehnung L entspricht somit der maximalen Längsausdehnung des Gassacks entlang einer Richtung parallel zur Symmetrieachse des Gassacks. Der Aufnahmebereich 15 ist in einem bestimmten Abstand von dem ersten bzw. dem zweiten Randabschnitt 101, 102 positioniert, nämlich so, dass der feste Endabschnitt 402 des Aufnahmeabschnitts 15 in einem Abstand L₁ von dem ersten Randabschnitt 101 positioniert ist, der mindestens die Hälfte der Ausdehnung L des Grundbereichs 150 beträgt.

Mit anderen Worten befindet sich eine Schnittlinie S einer Ebene, entlang der sich der Aufnahmeabschnitt 15 (bzw. die Nähte 17a, 17b) erstreckt, mit einer Ebene, entlang derer der Grundbereich 150 (im flach ausgebreiteten Zustand) der ersten Gassacklage verläuft, in einem Abstand L₁ von dem ersten Randabschnitt 101, der mindestens die Hälfte der Ausdehnung L beträgt.

Auch ist denkbar, dass der Abstand L₁ das 0,5-fache bis 0,8-fache der Ausdehnung L beträgt, insbesondere beträgt der Abstand L₁ das 0,6-fache der Ausdehnung L.

Des Weiteren weist der Aufnahmebereich 15 eine Höhe X auf, d.h. eine maximale Ausdehnung zwischen dem festen Endabschnitt 402 und dem freien Endabschnitt 401 (freies Ende) gemessen entlang der Haupterstreckungsebene des Aufnahmebereichs 15 (bzw. der Ebene, in der sich die Nähte 17a, 17b befinden) und senkrecht zu dem festen Endabschnitt 402 (bzw. zu der Schnittlinie S). Die Lage des festen Endabschnitts 402 wird durch die Länge der Nähte 17a, 17b bestimmt, d.h. durch die Lage ihres jeweiligen, dem Grundbereich 150 der ersten Gassacklage zugewandten Endes 171 a, 171b, wobei der Verlauf einer gedachten Verbindungslinie V durch die Enden 171 a, 171b dem Verlauf des festen Endabschnitts 402 entspricht. Die Position des freien Endabschnitts 402 ist durch den Verlauf des den Aufnahmeabschnitts 15 abschließenden Randes des Endabschnitts 402 gegeben.

Die Öffnung 14 zur Aufnahme eines Gasgenerators ist nun so positioniert, dass sich ihr Mittelpunkt in einem Abstand X₁ befindet, der die Hälfte oder mindestens die Hälfte der Höhe X des Aufnahmebereichs 15 beträgt. Denkbar ist auch, dass sich der Mittelpunkt der Öffnung 14 in einem Abstand X befindet, der das 0,4 bis 0,8-fache der Höhe X des Aufnahmebereichs 15 beträgt.

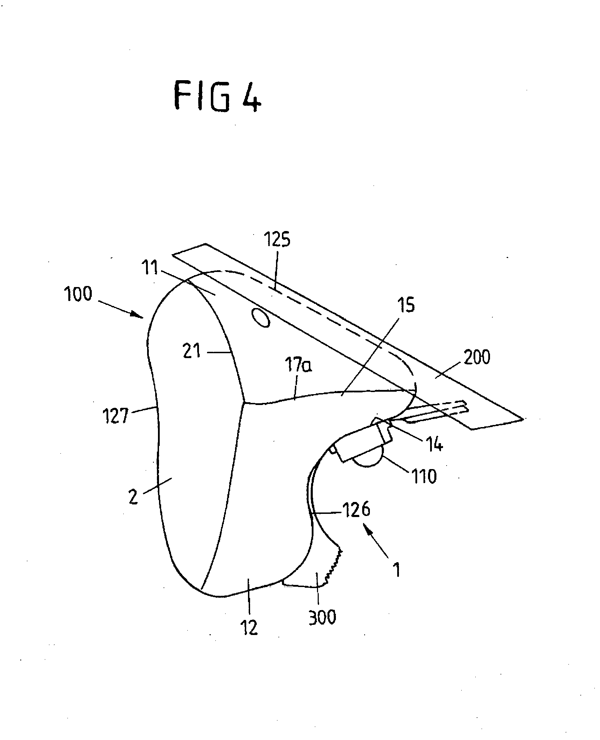

Figur 4 zeigt den erfindungsgemäßen Gassack 100 der vorhergehenden Figuren in seinem im Fahrzeug eingebauten und aufgeblasenen Zustand. Die aufgeblasene Kammer des Gassacks 100 wird durch die erste Gassacklage 1, d.h. die Gassacklagensegmente 11, 12, sowie durch die zweite Gassacklage 2 begrenzt.

Ein Gasgenerator 110 ist zumindest teilweise in die Öffnung 14 des Aufnahmeabschnitts 15 eingesetzt und an dem Aufnahmeabschnitt 15 insbesondere über die Befestigungsöffnungen 114, 124 (Fig. 1) festgelegt.

Der Gassack ist so gestaltet, dass sich die zweite Gassacklage 2 (bzw. ein dem Fahrzeugheck zugewandter Rand 127) im Wesentlichen entlang einer durch die Fahrzeughöhen- und Fahrzeugquerrichtung aufgespannten Ebene erstreckt, d.h. ihre Haupterstreckungsebene ist durch die durch Fahrzeughöhen- und die Fahrzeugquerrichtung aufgespannte Ebene gebildet. Dies ist jedoch selbstverständlich nicht zwingend, es ist auch denkbar, dass die zweite Gassacklage 2 schräg zu der durch Fahrzeughöhen- und Fahrzeugquerrichtung aufgespannten Ebene orientiert ist.

Die Ebene, in der die Nähte 17a, 17b, über die der erste und der zweite Abschnitt 141, 16 der ersten Gassacklage 1 zum Herstellen des Aufnahmeabschnitts 15 verbunden sind, verlaufen, erstreckt sich im Wesentlichen senkrecht zur Haupterstreckungsebene der zweiten Gassacklage 2 (etwa parallel zu einer durch die Fahrzeughöhen- und Fahrzeuglängsrichtung aufgespannten Ebene). Insbesondere ist zu erkennen, dass die Ebene, in der sich die Nähte 17a, 17b erstrecken, oberhalb der Mitte - bezogen auf die Fahrzeughöhenrichtung - der zweiten Gassacklage 2 verläuft. Dies wird durch die Auslegung des Gassacks gemäß der Fig. 3 erreicht, so dass der aufgeblasene Gassack eine möglichst gute Schutzposition im Fahrzeuginnenraum einnimmt (d.h. einen optimierten "3D-Gassack" darstellt).

Beispielsweise ist das erste Gassacklagensegment 11 der ersten Gassacklage 1 so beschaffen, dass es eine Seite 125 des Gassacks 100 ausbildet, die zumindest näherungsweise entlang einer Windschutzscheibe 200 des Fahrzeugs verläuft. Das zweite Gassacksegment 12 ist hingegen so ausgeformt, dass es mit einer Seite 126 einer Kontur eines Armaturenbretts folgt und insbesondere an dem Armaturenbrett anliegen kann.

Der in Figur 4 gezeigte Gassack ist ein Beifahrergassack, wobei der Gasgenerator in Form eines Rohrgas- oder Topfgasgenerators ausgebildet sein kann. Die Erfindung ist jedoch natürlich nicht auf einen Beifahrergassack beschränkt, sondern lässt sich allgemein für Frontgassäcke, d.h. auch für einen Fahrergassack verwenden.

Ein dem Fahrzeugheck zugewandter Rand 127 der zweiten Gassacklage 2 ist im Wesentlichen parallel oder leicht schräg zu einer Ebene orientiert, die durch die Fahrzeughöhen- bzw. die Fahrzeugquerrichtung aufgespannt ist.

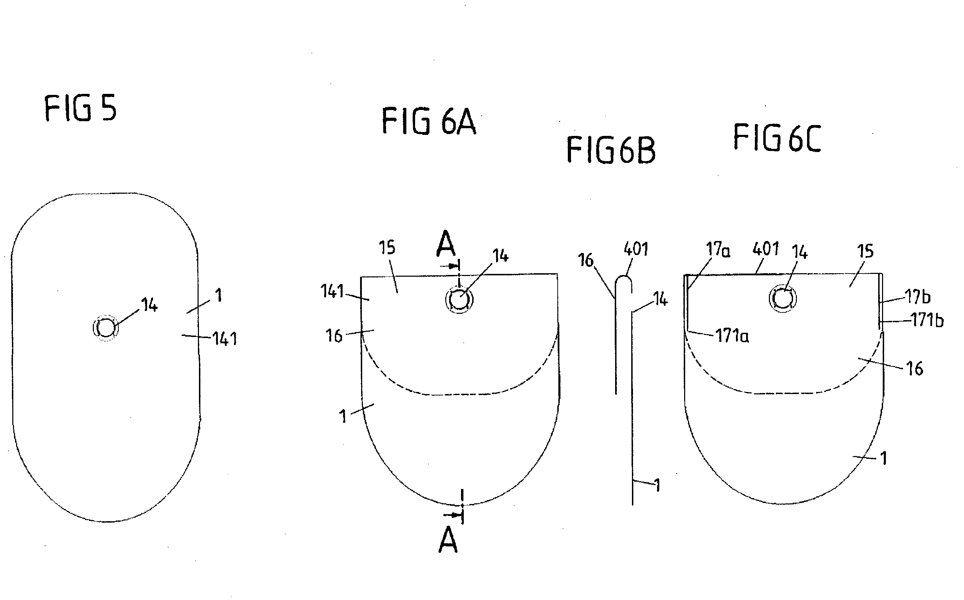

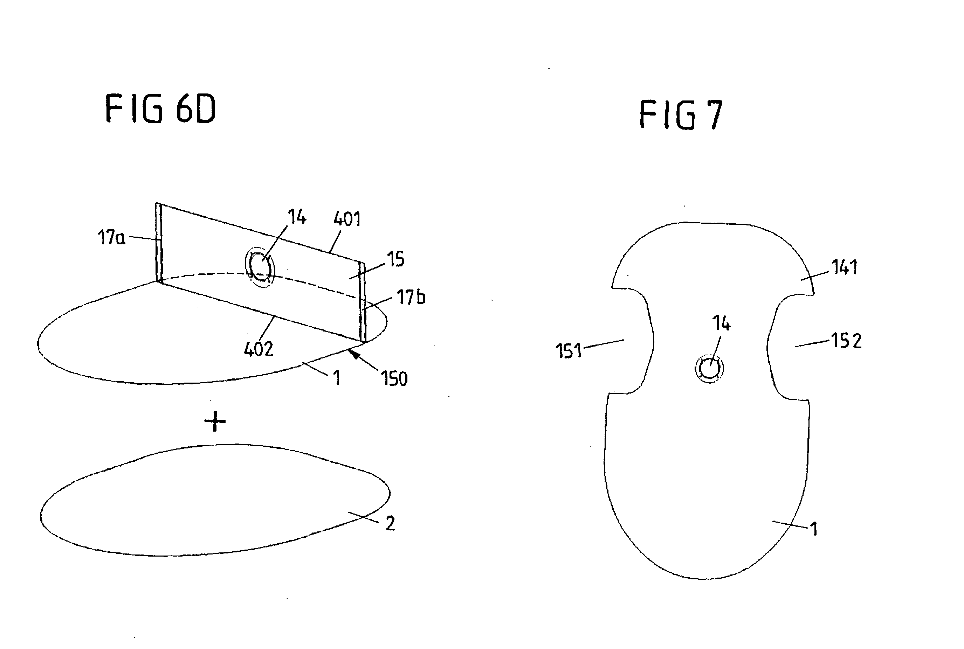

Die Figuren 5 und 6A bis 6D betreffen eine weitere Ausführungsform des erfindungsgemäßen Gassacks, wonach die erste Gassacklage 1 im Unterschied zur Fig. 1 einstückig ausgebildet ist, d.h. aus einem einzigen Materialzuschnitt gebildet ist.

Die erste Gassacklage 1 weist wiederum einen ersten Abschnitt 141 mit einer Öffnung 14 zum Einführen eines Gasgenerators (nicht dargestellt) auf. Des Weiteren wird zur Herstellung des Aufnahmeabschnitts 15 des Gassacks wie im Beispiel der Figuren 1 und 2 ein zweiter Abschnitt 16 umgefaltet (Figuren 6A, 6B) und mittels zweier zueinander beabstandeter, geradlinig ausgeführter Nähte 17a, 17b mit dem ersten Abschnitt 141 verbunden (Fig. 6C).

Die Nähte 17a, 17b verlaufen längs jeweils eines Seitenrandes der ersten Gassacklage 1, d.h. längs einer Symmetrieachse einer ersten Gassacklage 1. Die Länge der Nähte 17a, 17b bestimmt hier die Höhe des Aufnahmebereichs 15, d.h. die Ausdehnung zwischen Endabschnitten 171 a, 171b der Nähte 17a, 17b und dem freien Endabschnitt 402 des laschenartig von dem Grundbereich 150 der ersten Gassacklage 1 abstehenden Aufnahmebereichs 15. Der Grundbereich 150 der ersten Gassacklage 1 wird dann analog zur Figur 2F mit der zweiten Gassacklage 2 mittels einer Umfangsnaht verbunden. Eine weitere Möglichkeit zur Realisierung der ersten Gassacklage 1 zeigt die Figur 7. Hiernach ist die erste Gassacklage 1 ebenfalls einstückig ausgebildet, besitzt jedoch nicht wie die erste Gassacklage aus Figur 5 geradlinige Seitenränder, sondern ähnlich (oder identisch) der ersten Gassacklage aus Figur 2A seitliche Einbuchtungen 151, 152, die nach dem Umfalten des zweiten Abschnitts 16 und Verbinden mit dem ersten Abschnitt 141 zum Herstellen des Anbindungsbereiches 15 den Anbindungsbereich 15 seitlich begrenzen. Durch die Einbuchtungen 151, 152 ist der Aufnahmebereich 15 schmaler als der Grundbereich 150 der ersten Gassacklage 1.

Die Nähte 17a, 17b verlaufen entlang der Kontur der Einbuchtungen 151, 152, d.h. sie weisen jeweils einen schräg zur Symmetrieachse orientierten oberen Abschnitt und einen zumindest näherungsweise senkrecht zur Symmetrieachse orientierten unteren Abschnitt auf, wobei der obere und der untere Abschnitt jeweils über eine Krümmung miteinander verbunden sind.

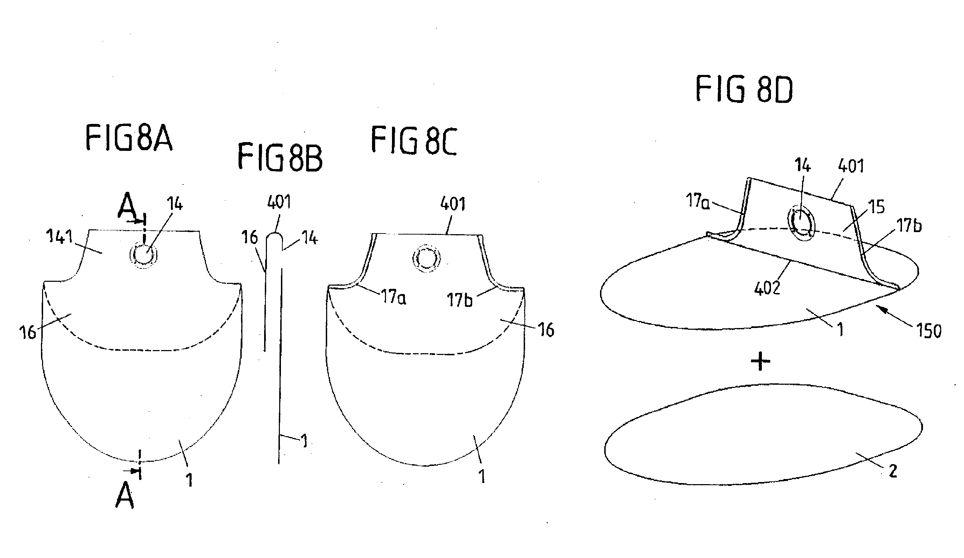

Nach dem Herstellen des Aufnahmebereichs 15 wird der Grundbereich 150 der ersten Gassacklage 1 wiederum mit einer Umfangsnaht an der zweiten Gassacklage 2 befestigt (vgl. Figuren 8A - 8D).

Es wird darauf hingewiesen, dass sämtliche oder zumindest einige der Nähte, die zur Herstellung des Gassacks erzeugt werden, auch als Kleb- oder Schweißnaht ausgestaltet sein können.

### Bezugszeichenliste

- 1: erste Gassacklage
- 2: zweite Gassacklage
- 11: erstes Gassacklagensegment
- 12: zweites Gassacklagensegment
- 13: Kreisnaht
- 14: Öffnung
- 15: Aufnahmeabschnitt
- 16: zweiter Abschnitt
- 17a, 17b: Naht
- 18: Teilbereich
- 100: Gassack
- 101: erster Randabschnitt
- 102: zweiter Randabschnitt
- 110: Gasgenerator
- 111: Grundkörper erstes Segment
- 112, 122: schmalerer Abschnitt
- 121: Grundkörper zweites Segment
- 113, 123: Öffnung
- 114, 124: Befestigungsöffnung
- 125: Gassackseite
- 126: Gassackseite
- 127: Randabschnitt zweite Gassacklage
- 141: erster Abschnitt
- 150: Grundbereich erste Gassacklage
- 151, 152: Einbuchtung
- 171a, 171b: Naht
- 200: Windschutzscheibe
- 300: Armaturenbrett
- 401: freier Endabschnitt
- 402: fester Endabschnitt

## Patentansprüche

1. Gassack für ein Fahrzeuginsassen-Rückhaltesystem, mit
- einer ersten und einer zweiten Gassacklage (1, 2), die eine aufblasbare Kammer des Gassacks (100) begrenzen, wobei
- die erste Gassacklage (1) einen ersten Abschnitt (141) mit einer Öffnung (14) zum zumindest teilweisen Einführen eines Gasgenerators (110) aufweist und einen zweiten Abschnitt (16), der auf den ersten Abschnitt (141) zu umgefaltet und mit dem ersten Abschnitt (141) verbunden ist, so dass der erste und der zweite Abschnitt (141, 16) der ersten Gassacklage (1) einen Aufnahmebereich (15) zum Aufnehmen eines Gasgenerators (110) ausbilden.

2. Gassack nach Anspruch 1, **dadurch gekennzeichnet, dass** der mit dem ersten Abschnitt (141) verbundene zweite Abschnitt (16) der ersten Gassacklage (1) zumindest näherungsweise um 180° umgefaltet, ist.

3. Gassack nach Anspruch 1 oder 2, **dadurch gekennzeichnet, dass** sich der zweite Abschnitt (16) der ersten Gassacklage (1) über die Öffnung (14) in dem ersten Abschnitt (141) hinweg erstreckt.

4. Gassack nach einem der vorhergehenden Ansprüche, **dadurch gekennzeichnet, dass** die Öffnung (14) in der ersten Gassacklage (1) in einer Ebene verläuft, die - bezogen auf den aufgeblasenen Zustand des Gassacks (100) - senkrecht oder quer zur Haupterstreckungsebene der zweiten Gassacklage (2) verläuft.

5. Gassack nach einem der vorhergehenden Ansprüche, **dadurch gekennzeichnet, dass** der Aufnahmebereich (15) durch zwei voneinander beabstandete Nähte (17a, 17b) begrenzt ist, über die der zweite Abschnitt (16) der ersten Gassacklage (1) mit dem ersten Abschnitt (141) verbunden ist.

6. Gassack nach Anspruch 5, **dadurch gekennzeichnet, dass** die Nähte (17a, 17b) in einer Ebene verlaufen, die im aufgeblasenen Zustand des Gassacks (100) schräg oder senkrecht zu der Haupterstreckungsebene der zweiten Gassacklage (2) verläuft.

7. Gassack nach einem der vorhergehenden Ansprüche, **dadurch gekennzeichnet, dass** der Aufnahmebereich (15) von einem durch die übrige erste Gassacklage gebildeten Grundbereich (150) der ersten Gassacklage (1) absteht.

8. Gassack nach Anspruch 7, **dadurch gekennzeichnet, dass**
- der Aufnahmebereich (15) mit einem Endabschnitt (402) in den Grundbereich (150) einmündet;
- der Grundbereich (150) der ersten Gassacklage (1) einen ersten Randabschnitt (101) aufweist, der - bezogen auf den im Fahrzeug eingebauten und aufgeblasenen Zustand des Gassacks - dem Fahrzeugboden zugewandt ist, und einen zweiten Randabschnitt (102), der dem Fahrzeugdach zugewandt ist, und wobei
- der Aufnahmebereich (15) so positioniert ist, dass sein in den Grundbereich (150) einmündender Endabschnitt (402) einen Abstand L₁ von dem ersten Randabschnitt (101) aufweist, der mehr als die Hälfte der Ausdehnung L des flach ausgebreiteten Grundbereichs (150) der ersten Gassacklage (1) zwischen seinem ersten und zweiten Randabschnitt (101, 102) beträgt.

9. Gassack nach Anspruch 8, **dadurch gekennzeichnet, dass** der Abstand L₁ mindestens die Hälfte und höchstens das 0,8-fache der Ausdehnung L beträgt.

10. Gassack nach einem der Ansprüche 7 bis 9, **dadurch gekennzeichnet, dass** der Aufnahmeabschnitt (15) - bezogen auf den nicht aufgeblasenen Zustand des Gassacks (100) - eine maximale Ausdehnung X zwischen seinem in den Grundbereich (150) der ersten Gassacklage (1) einmündenden Endabschnitt (402) und einem weiteren, freien Endabschnitt (401) aufweist, wobei der Mittelpunkt der Öffnung (14) zum Einführen eines Gasgenerators (110) in einem Abstand X₁ von dem in den Grundbereich (150) einmündenden Endabschnitt (402) positioniert ist, der zumindest näherungsweise die Hälfte der maximalen Ausdehnung X des Aufnahmebereichs (15) beträgt.

11. Gassack nach Anspruch 10, **dadurch gekennzeichnet, dass** der Abstand X₁ mindestens das 0,4-fache und höchstens das 0,8-fache der maximalen Ausdehnung X des Aufnahmebereichs (15) beträgt.

12. Gassack nach einem der vorhergehenden Ansprüche, **dadurch gekennzeichnet, dass** die erste Gassacklage (1) aus mindestens zwei Gassacklagensegmenten (11, 12), die über mindestens eine Naht (13) miteinander verbunden sind, ausgebildet ist.

13. Gassack nach einem der Ansprüche 1 bis 11, **dadurch gekennzeichnet, dass** die erste Gassacklage (1) einstückig ausgebildet ist.

14. Gassack nach einem der vorhergehenden Ansprüche, **dadurch gekennzeichnet, dass** die erste Gassacklage (1) mit der zweiten Gassacklage (2) entlang einer Umfangsnaht (21) verbunden ist.

15. Verfahren zum Herstellen eines Gassacks gemäß einem der vorhergehenden Ansprüche, mit den Schritten
- Bereitstellen einer ersten und einer zweiten Gassacklage (1,2), wobei die erste Gassacklage (1) einen ersten Abschnitt (141) mit einer Öffnung (14) zum zumindest teilweisen Einführen eines Gasgenerators (110) aufweist;
- Umfalten eines zweiten Abschnitts (16) der ersten Gassacklage (1) auf den ersten Abschnitt (141) zu; und
- Verbinden des zweiten mit dem ersten Abschnitt (141, 16), so dass der erste und der zweite Abschnitt (141, 16) der ersten Gassacklage (1) einen Aufnahmebereich (15) zum Aufnehmen eines Gasgenerators (110) ausbilden.

## Claims

1. A gas bag for a vehicle occupant restraint system, comprising
- a first and a second gas bag layer (1, 2) which define an inflatable chamber of the gas bag (100), wherein
- the first gas bag layer (1) includes a first portion (141) with an opening (14) for at least partly introducing a gas generator (110) and a second portion (16) which is folded over towards the first portion (141) and is connected with the first portion (141), so that the first and the second portion (141, 16) of the first gas bag layer (1) form a receiving region (15) for receiving a gas generator (110).

2. The gas bag according to claim 1, **characterized in that** the second portion (16) of the first gas bag layer (1) connected with the first portion (141) is folded over at least approximately by 180°.

3. The gas bag according to claim 1 or 2, **characterized in that** the second portion (16) of the first gas bag layer (1) extends beyond the opening (14) in the first portion (141).

4. The gas bag according to any of the preceding claims, **characterized in that** the opening (14) in the first gas bag layer (1) extends in a plane which - in relation to the inflated condition of the gas bag (100) - extends vertically or transversely to the main plane of extension of the second gas bag layer (2).

5. The gas bag according to any of the preceding claims, **characterized in that** the receiving region (15) is defined by two seams (17a, 17b) spaced from each other, via which the second portion (16) of the first gas bag layer (1) is connected with the first portion (141).

6. The gas bag according to claim 5, **characterized in that** the seams (17a, 17b) extend in a plane which in the inflated condition of the gas bag (100) extends obliquely or vertically to the main plane of extension of the second gas bag layer (2).

7. The gas bag according to any of the preceding claims, **characterized in that** the receiving region (15) protrudes from a base region (150) of the first gas bag layer (1), which is formed by the remaining first gas bag layer.

8. The gas bag according to claim 7, **characterized in that**
- the receiving region (15) opens into the base region (150) with an end portion (402);
- the base region (150) of the first gas bag layer (1) includes a first edge portion (101) which - in relation to the condition of the gas bag mounted in the vehicle and inflated - faces the vehicle floor, and a second edge portion (102) which faces the vehicle roof, and wherein
- the receiving region (15) is positioned such that its end portion (402) opening into the base region (150) has a distance L₁ from the first edge portion (101), which amounts to more than half of the expansion L of the base region (150) of the first gas bag layer (1) spread out flat between its first and its second edge portion (101, 102).

9. The gas bag according to claim 8, **characterized in that** the distance L₁ amounts to at least half of and not more than 0.8 times the expansion L.

10. The gas bag according to any of claims 7 to 9, **characterized in that** the receiving portion (15) - in relation to the non-inflated condition of the gas bag (100) - has a maximum expansion X between its end portion (402) opening into the base region (150) of the first gas bag layer (1) and a further, free end portion (401), wherein the center of the opening (14) for introducing a gas generator (110) is positioned at a distance X₁ from the end portion (402) opening into the base region (150), which at least approximately amounts to half of the maximum expansion X of the receiving region (15).

11. The gas bag according to claim 10, **characterized in that** the distance X₁ amounts to at least 0.4 times and not more than 0.8 times the maximum expansion X of the receiving region (15).

12. The gas bag according to any of the preceding claims, **characterized in that** the first gas bag layer (1) is formed of at least two gas bag layer segments (11, 12) which are connected with each other via at least one seam (13).

13. The gas bag according to any of claims 1 to 11, **characterized in that** the first gas bag layer (1) is formed in one piece.

14. The gas bag according to any of the preceding claims, **characterized in that** the first gas bag layer (1) is connected with the second gas bag layer (2) along a circumferential seam (21).

15. A method for manufacturing a gas bag according to any of the preceding claims, with the following steps:
- providing a first and a second gas bag layer (1, 2), wherein the first gas bag layer (1) includes a first portion (141) with an opening (14) for at least partly introducing a gas generator (110);
- folding over a second portion (16) of the first gas bag layer (1) towards the first portion (141); and
- connecting the second with the first portion (141, 16), so that the first and the second portion (141, 16) of the first gas bag layer (1) form a receiving region (15) for receiving a gas generator (110).

## Revendications

1. Coussin gonflable pour un système de retenue de passagers, comprenant :
- une première couche et une deuxième couche de coussin gonflable (1, 2), lesquelles délimitent une chambre gonflable du coussin gonflable (100),
- la première couche de coussin gonflable (1) présentant une première section (141) pourvue d'une ouverture (14) servant à introduire au moins en partie un générateur de gaz (110) ainsi qu'une deuxième section (16), qui est repliée en direction de la première section (141) et est reliée à la première section (141) de sorte que la première section et la deuxième section (141, 16) de la première couche de coussin gonflable (1) réalisent une zone de logement (15) servant à loger un générateur de gaz (110).

2. Coussin gonflable selon la revendication 1, **caractérisé en ce que** la deuxième section (16), reliée à la première section (141), de la première couche de coussin gonflable (1) est repliée au moins approximativement de 180°.

3. Coussin gonflable selon la revendication 1 ou 2, **caractérisé en ce que** la deuxième section (16) de la première couche de coussin gonflable (1) s'étend au-delà de l'ouverture (14) dans la première section (141).

4. Coussin gonflable selon l'une quelconque des revendications précédentes, **caractérisé en ce que** l'ouverture (14) s'étend dans la première couche de coussin gonflable (1) dans un plan, qui s'étend - par rapport à l'état gonflé du coussin gonflable (100) - de manière perpendiculaire ou de manière transversale par rapport au plan d'extension principal de la deuxième couche de coussin gonflable (2).

5. Coussin gonflable selon l'une quelconque des revendications précédentes, **caractérisé en ce que** la zone de logement (15) est délimitée par deux coutures (17a, 17b) espacées l'une de l'autre, par l'intermédiaire desquelles la deuxième section (16) de la première couche de coussin gonflable (1) est reliée à la première section (141).

6. Coussin gonflable selon la revendication 5, **caractérisé en ce que** les coutures (17a, 17b) s'étendent dans un plan, qui s'étend, à l'état gonflé du coussin gonflable (100), de manière inclinée ou de manière perpendiculaire par rapport au plan d'extension principal de la deuxième couche de coussin gonflable (2).

7. Coussin gonflable selon l'une quelconque des revendications précédentes, **caractérisé en ce que** la zone de logement (15) dépasse d'une zone de base (150), formée par le reste de la première couche de coussin gonflable, de la première couche de coussin gonflable (1).

8. Coussin gonflable selon la revendication 7, **caractérisé en ce**
- **que** la zone de logement (15) pourvue d'une section d'extrémité (402) débouche dans la zone de base (150) ;
- **que** la zone de base (150) de la première couche de coussin gonflable (1) présente une première section de bord (101), qui - par rapport à l'état monté dans le véhicule et gonflé du coussin gonflable - est tournée vers le plancher du véhicule, ainsi qu'une deuxième section de bord (102), qui est tournée vers le pavillon du véhicule, et
- la zone de logement (15) étant positionnée de telle manière que sa section d'extrémité (402) débouchant dans la zone de base (150) présente une distance L₁ par rapport à la première section de bord (101), laquelle distance est égale à plus de la moitié de l'extension L de la zone de base (150), déployée à plat, de la première couche de coussin gonflable (1) entre sa première et sa deuxième section de bord (101, 102).

9. Coussin gonflable selon la revendication 8, **caractérisé en ce que** la distance L₁ est égale à au moins la moitié de et au maximum 0,8 fois l'extension L.

10. Coussin gonflable selon l'une quelconque des revendications 7 à 9, **caractérisé en ce que** la section de logement (15) présente - par rapport à l'état non gonflé du coussin gonflable (100) - une extension maximale X entre sa section d'extrémité (402) débouchant dans la zone de base (150) de la première couche de coussin gonflable (1) et une autre section d'extrémité (401) dégagée, le point central de l'ouverture (14) servant à introduire un générateur de gaz (110) étant positionné à une distance X₁ par rapport à la section d'extrémité (402) débouchant dans la zone de base (150), laquelle distance est égale au moins approximativement à la moitié de l'extension X maximale de la zone de logement (15).

11. Coussin gonflable selon la revendication 10, **caractérisé en ce que** la distance X₁ est égale à au moins 0,4 fois et au maximum 0,8 fois l'extension X maximale de la zone de logement (15).

12. Coussin gonflable selon l'une quelconque des revendications précédentes, **caractérisé en ce que** la première couche de coussin gonflable (1) est réalisée à partir d'au moins deux segments de couche de coussin gonflable (11, 12), qui sont reliés l'un à l'autre par l'intermédiaire au moins d'une couture (13).

13. Coussin gonflable selon l'une quelconque des revendications 1 à 11, **caractérisé en ce que** la première couche de coussin gonflable (1) est réalisée d'un seul tenant.

14. Coussin gonflable selon l'une quelconque des revendications précédentes, **caractérisé en ce que** la première couche de coussin gonflable (1) est reliée à la deuxième couche de coussin gonflable (2) le long d'une couture périphérique (21).

15. Procédé servant à fabriquer un coussin gonflable selon l'une quelconque des revendications précédentes, comprenant les étapes suivantes :
- la mise à disposition d'une première et d'une deuxième couche de coussin gonflable (1, 2), la première couche de coussin gonflable (1) présentant une première section (141) pourvue d'une ouverture (14) servant à introduire au moins en partie un générateur de gaz (110) ;
- le pliage d'une deuxième section (16) de la première couche de coussin gonflable (1) sur la première section (141) ; et
- l'assemblage de la deuxième à la première section (141, 16) de sorte que la première et la deuxième section (141, 16) de la première couche de coussin gonflable (1) réalisent une zone de logement (15) servant à loger un générateur de gaz (110).
